# EUROPEAN PATENT APPLICATION

(11) **EP 4 397 867 A1**
(43) Date of publication of application: **10.07.2024**
(21) Application number: 23178844.9
(22) Date of filing: 13.06.2023
(51) Int. Cl.: F15B 15/06, F15B 15/28, F16K 37/00, F16K 31/163, F15B 21/048

(54) **IMPROVED STRUCTURE OF PNEUMATIC ACTUATOR**

(30) Priority: 05.01.2023 TW 112100334; 05.01.2023 TW 112200087 U
(71) Applicant: Chen, Kao-Sung, Tainan City 702026 (TW)
(72) Inventor: Chen, Kao-Sung, Tainan City 702026 (TW)
(74) Representative: Cabinet Chaillot

(57) **Abstract**

An improved structure of a pneumatic actuator (5) is direct to the pneumatic actuator (5) and a signal transmitter (6) connected thereof and the respective shaft cores (51) are integrated to be one. An assembly slot (57) integrated with a body (50) is spaced on the upper portion of the body (50) of the pneumatic actuator (5) and at the shaft line corresponding to the shaft core (51), for the signal transmitter (6) to be installed inside the assembly slot (57). A shaft hole is installed at the position of the bottom of the assembly slot (57) corresponding to the shaft core (51) and the shaft core (51) passes through the body (50) of the pneumatic actuator (5) and the interior of the body (50) via the shaft hole. The assembly slot (57) is covered by a cover plate. Through such a configuration, the originally independent and separated signal transmitter (6) and pneumatic actuator (5) are integrated, thereby ensuring the consistent perpendicularity and concentricity of the shaft cores (51) thereof. Meanwhile, the integration of the signal transmitter (6) and pneumatic actuator (5) can reduce components and save labor for assembly.

## Description

### BACKGROUND OF THE INVENTION

The present invention relates to an improved structure of a pneumatic actuator, and more particularly, to integrate a signal transmitter and the pneumatic actuator originally separated, thereby ensuring the concentricity and perpendicularity on motion of the pneumatic actuator and the signal transmitter, and the pneumatic actuator could be assembled with less work if the components are less.

### DESCRIPTION OF THE RELATED ART

Factories are mostly installed with pipelines for the purpose of transporting liquid or gaseous materials. Industrial valves are installed at each delivery point of the pipeline and the delivery instruction of the pipeline could be executed through controlling the valve to open or to close. In view of the plant site with large area, a fluid controlling system is required to execute the instructions strictly and efficiently and control effectively, thus, to achieve the said requirement, a complete and effective central control system is necessary to maintain the production efficiency and avoid safety accidents.

The pneumatic actuator is one of the primary operating components of the flow control system, mainly to receive an external pneumatic power and convert the power to axial torque, and then to turn the valve linked to the actuator, thereby achieve the purpose of opening or closing the pipeline. The signal transmitter is also an important component of the flow control system, to detect the position of the actuator through the built-in sensor of the signal transmitter and send a signal feedback current to the upper layer control circuit instantly, so as to control the real-time status of the flow control system.

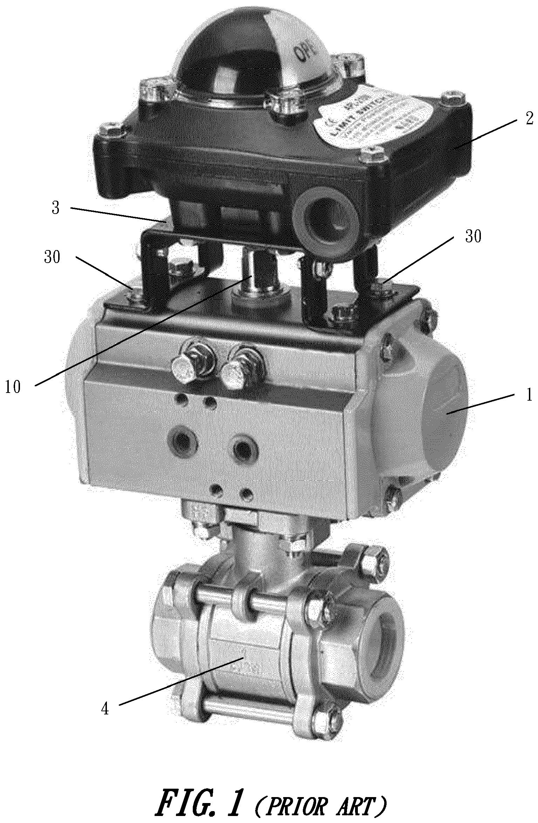

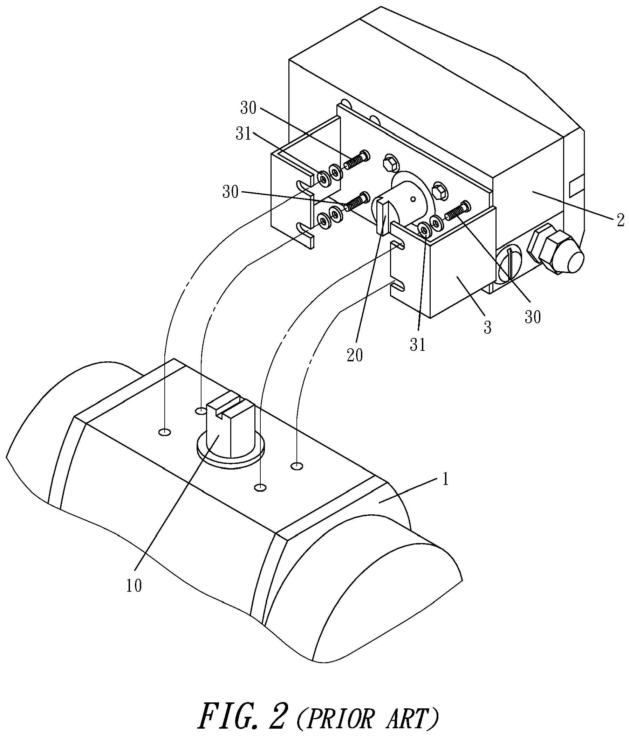

Referring to Figs. 1 and 2, the prior art pneumatic actuator 1 (the power source of the actuator is pneumatic pressure or electricity and the present invention is primarily directed to the pneumatic actuator) and signal transmitter 2 are two independent devices and the actuator 1 and transmitter 2 are conventionally assembled and connected by means of a steel bracket 3, screws 30, washers 31 and nuts. It is observed by the practical experience, the foregoing assembly models have the following deficiencies:
1. The pneumatic actuator 1 (either pneumatic or electric) and the signal transmitter 2 respectively belong to different industries, the user needs to purchase them respectively and then proceeds with assembly according to the assembly instructions, and the various fasteners, such as screws 30, washers 31,etc. are required at the time of assembling, and the assembly requires much time and is difficult, and while assembling, the user is particularly required to pay strict attention to maintain the concentricity and the perpendicularity between the two shaft cores 10, 20 separately defined in the pneumatic actuator 1 and the signal transmitter 2, any neglection may causes the potential risk of deviated rotation of two shaft cores 10, 20 while operating.
2. When the fluid inside the pipeline 4 is pushed by-a high pressure, the pipeline 4 is vibrating due to the liquid flow and after a long period, the said vibrations will result in the loosening of the screws 30 and the nuts and further falling off, and finally the fixing function thereof is missing.
3. The pneumatic actuator 1 and the signal transmitter 2 are engaged and linked through the shaft cores 10, 20 individually. While suffering from vibration and resulting in loosening, the two shaft cores 10, 20 will be certainly damaged and oblique and the built-in sensor of the signal transmitter 2 will detect an inaccurate position of the pneumatic actuator 1.

In view of the above shortcomings found in actual applications of the pneumatic actuator and signal transmitter assembly, the present invention developed an improved design to overcome the problems, which eventually leads to the present invention.

### SUMMARY OF THE INVENTION

It is a primary objective of the present invention to provide a pneumatic actuator that can integrate the signal transmitter and the pneumatic actuator originally separated individually and combine the two shaft cores respectively defined in the signal transmitter and the pneumatic actuator into one, thereby ensuring the perpendicularity and concentricity of the shaft core to be consistent, and further reducing the assembly time and parts when assembling the signal transmitter with the pneumatic actuator.

The primary feature of the present invention is that the individual shaft cores of the signal transmitter and the pneumatic actuator were integrated into one unit; an assembly slot formed integrally is spaced on the upper portion of the main body of the pneumatic actuator and at the position corresponding to the shaft line of the shaft core, thereby installing the single transmitter inside the assembly slot; a shaft hole is installed at the position of the slot bottom of the assembly slot corresponding to the shaft core, thereby enabling the assembly slot to communicate with the inner of the main body and the top end of the shaft core can pass through the main body and the inner of the assemble slot through the shaft hole; and, the assembly slot opening is covered by a cover plate. By means of such configuration, originally, the signal transmitter and pneumatic actuator separated individually are integrated to be a signal so as to ensure that the perpendicularity and concentricity of the shaft cores of the pneumatic actuator and the signal transmitter to be consistent and avoid the potential risk of loosening caused by the vibration due to the flow of fluid inside the pipeline. Meanwhile, the said configuration can save the assembly work and reduce the burden of the user. Potential risks resulting from improper assembly are removed and users can purchase the device from one source. Less components can also save labor for assembly work.

Other features and advantages of the present invention will become apparent from the following description of the invention which refers to the accompanying embodiments and drawings.

### BRIEF DESCRIPTION OF THE DRAWINGS

Fig. 1 is a perspective reference view of the prior art pneumatic actuator and signal transmitter installed at a pipeline.
Fig. 2 is an exploded view of the prior art pneumatic actuator and signal transmitter.
Fig. 3 is a combined perspective view of the single m type pneumatic actuator and signal transmitter according to the embodiment of the present invention.
Fig. 4 is an exploded view of the single motion type pneumatic actuator and signal transmitter according to the embodiment of the present invention.
Fig. 5 is a sectional front view of the single acting type pneumatic actuator and the signal transmitter in the normal state according to the embodiment of the present invention.
Fig. 6 is a sectional top view of the single motion type pneumatic actuator in the normal state according to the embodiment of the present invention.
Fig. 7 is a sectional top view of the signal transmitter in the normal state according to the embodiment of the present invention.
Fig. 8 is a sectional front view of the single motion type pneumatic actuator and the signal transmitter in the state of reverse action according to the embodiment of the present invention.
Fig. 9 is a sectional top view of the single motion type pneumatic actuator in the state of reverse action according to the embodiment of the present invention.
Fig. 10 is a sectional top view of the signal transmitter in the state of reverse action according to the embodiment of the present invention.
Fig. 11 is a perspective view of the single motion type pneumatic actuator and signal transmitter installed at the pipeline according to the embodiment of the present invention.
Figs. 12 and 13 are the top views showing the motions of dual motions type pneumatic actuator inputting compressed air respectively from the forward direction air hole and reverse direction air hole according to the embodiment of the invention.
Figs. 14 and 15 are respectively the appearance view and exploded view of the pneumatic actuator fixing the filter regulator lubricator according to the embodiment of the invention.

### DETAILED DESCRIPTION OF EMBODIMENTS OF THE INVENTION

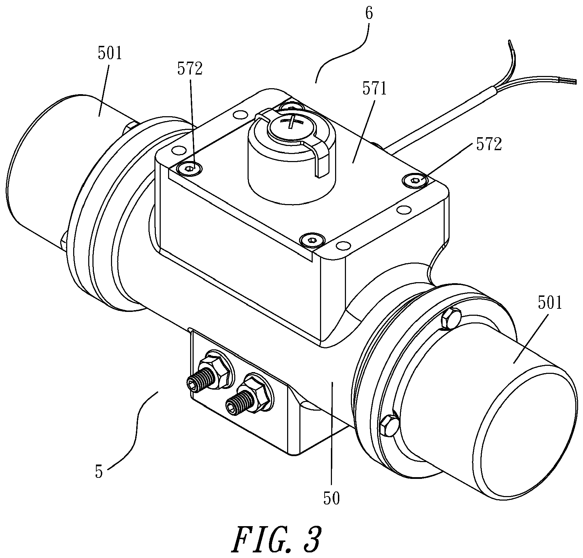

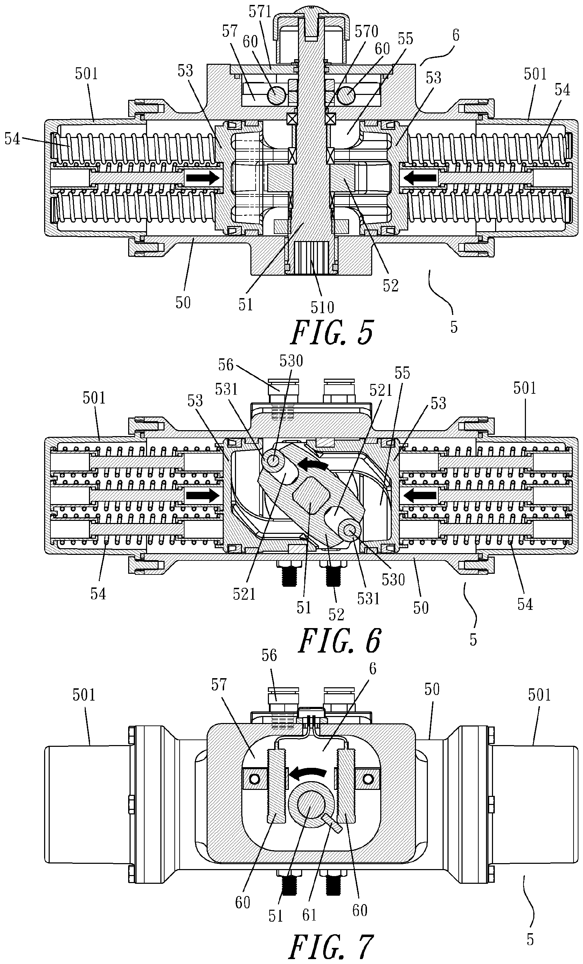

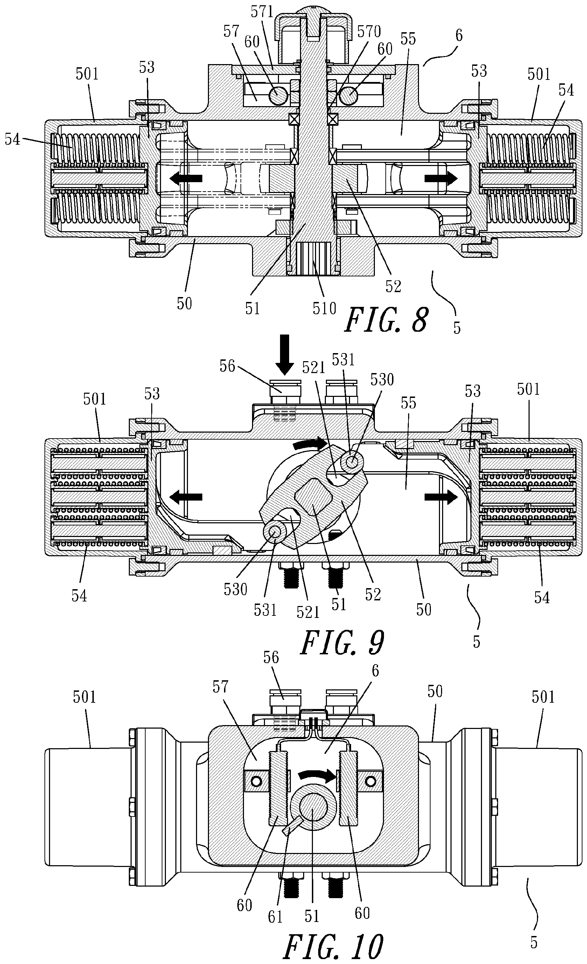

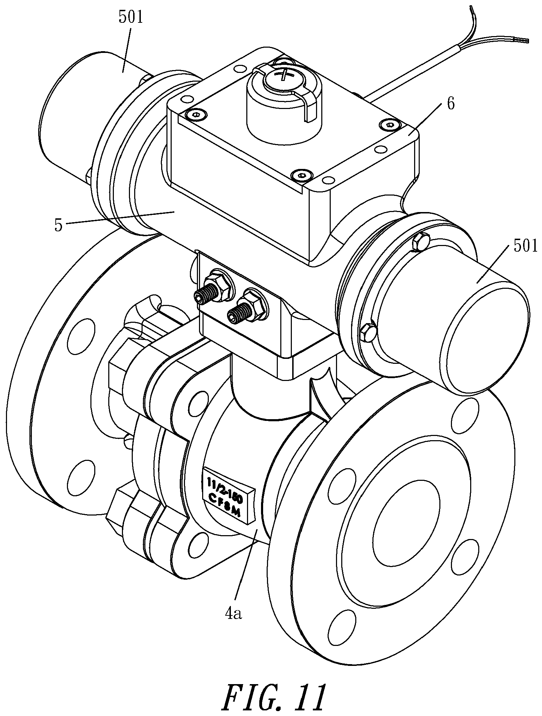

With reference to Figs. 3~7, a pneumatic actuator 5 is described as a single motion type pneumatic actuator, comprising a main body 50 with a hollow shape interior, wherein the middle of the interior of the main body 50 configured with a shaft core 51 vertically installed and restricted to rotate in place, the middle section of the shaft core 51 jointed through to fix with a central hole 520 of a cam 52, thereby enabling the cam 52 and the shaft core 51 to be in a linking-up movement integrally, and an embedding slot 521 respectively installed at the left and right ends of the cam 52. The left and right sides of the shaft core 51 are respectively configured with a piston 53 and two spring sets 54 respectively located at the back sides of the two pistons 53, wherein the ends of the two pistons 53 facing the cam 52 are respectively jointed with a cam ring 531 via a connecting rod 530 and the cam ring 531 can be embedded into the embedding slot 521 to be positioned and rotate pivotally. One end of the spring set 54 accesses to the side cap 501 fixed on the outside of the main body 50 and the other end accesses to the piston 53, thus enabling the two spring sets 54 to have strength to push the two pistons 53 to move toward the shaft core 51 end, and meanwhile the two pistons 53 can pull the shaft core 51 to deflect in an angle synchronously and move (Figs. 6 and 9). The bottom end of the shaft core 51 is configured with an engaging hole 510 (Fig. 5) to connect with a valve rotating shaft inside a pipeline 4a controlling the flow of the fluid (see Fig. 11), thereby enabling the valve rotating shaft to turn a angle when the shaft core 51 turning in a certain angle, to open or close the valve to control the flow status of the fluid inside the pipeline 4a. An airtight space 55 is defined inside the main body 50 between the two pistons 53 (Figs. 5, 6, 8, and 9), a pipe connector 56 is configured in the airtight space 55 located outside the main body 50 for enabling the outside compressed air into the airtight space 55 or to release the compressed air inside the airtight space 55.

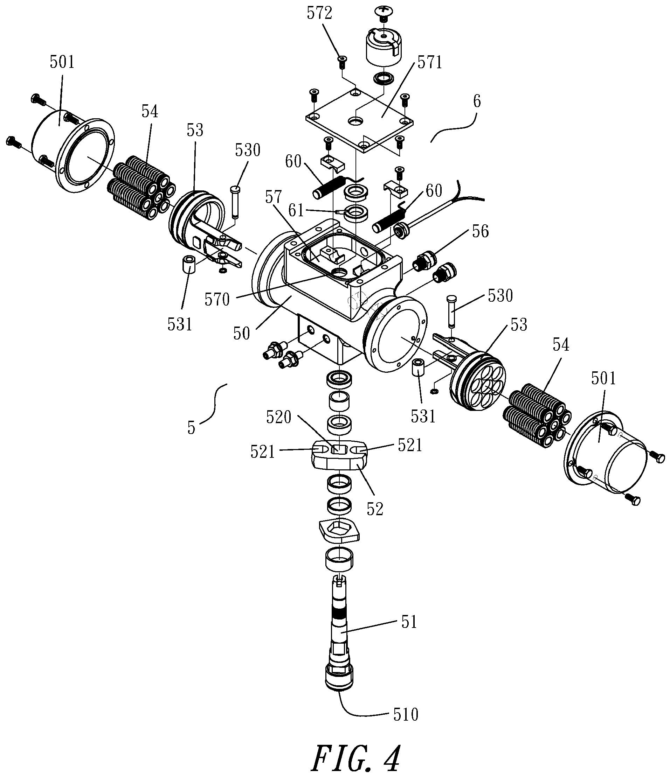

The upper part of the main body 50 are spaced with an assembly slot 57 formed integrally (Figs. 3~5), wherein the assembly slot 57 and the main body 50 are integrally formed by the stainless steel material in a manner of investment casting for mounting the signal transmitter 6. A shaft hole 570 is configured at the position of the slot bottom of the assembly slot 57 corresponding to the shaft core 51 (Figs. 4 and 5), wherein the shaft core 51 can go through the main body 50 and the interior of the assembly slot 57through the shaft hole 570 (Fig. 5); and the slot hole of the assembly slot 57 is covered by a cover plate 571 and fixed via the screws 572. The said signal transmitter 6 is a proximity sensor, a magnetic sensor 60 is respectively fixed on the left and right sides of the upper end of the shaft core 51 inside the assembly 57, a magnet 61 is connected to the shaft core 51 (Figs. 3 and 4), wherein the configuration of the magnet 61 and the shaft core 51 is crossed vertically and locate at the same horizontal surface with the two magnetic sensors 60, and the magnet 61 is installed between the two magnetic sensors 60. While in application, the magnet 61 is in a linking-up movement accompanying with the shaft core 51 to deflect an angle (Figs. 7 and 10), and when the magnet 61 approaches one of the magnetic sensors 60, the magnetic sensor 60 being approached will transmit a signal due to electromagnetic induction and input to the upper layer control circuit. Thus, due to the approach of the magnet 61 and one of the magnetic sensors 60 and the feedback of the different electric signals, the remote supervisor can be informed if the valve inside the pipeline 4a is opened or closed indeed.

According to the foregoing, there is no pressure inside the airtight space 55 of the pneumatic actuator 5 at the initial state (Figs. 5~7), the two pistons 53 are pushed by the spring set 54 to move toward the center of the main body 50, so that the two pistons 53 can drive the cam 52 to rotate counterclockwise in a quarter of a circle (90 degrees), the cam 52 converts the linear pushing force into an axial torque to rotate the shaft core 51, thereby enabling the shaft core 51 to simultaneously rotate the below valve inside the pipeline 4a. Meanwhile, the magnet 61 of the signal transmitter 6 is also in a linking-up movement accompanying with the shaft core 51 to deflect an angle, and when the magnet 61 approaches one of the magnetic sensors 60, the magnetic sensor 60 transmits an electric signal and input into the central control circuit due to the electromagnetic induction. When the compressed air enters from the pipe connector 56 as shown in Figs. 8~9, the pressure of the air pushes the two pistons 53 to respectively compress the corresponding spring sets 54 to set back., thereby enabling the piston 53 to pull the cam 52 to linear move and convert to the axial torque, driving the shaft core 51 to turn clockwise in approximate 90 degrees, to enable the shaft core 51 simultaneously turn the below valve inside the pipeline 4a to open or close the pipeline 4a.

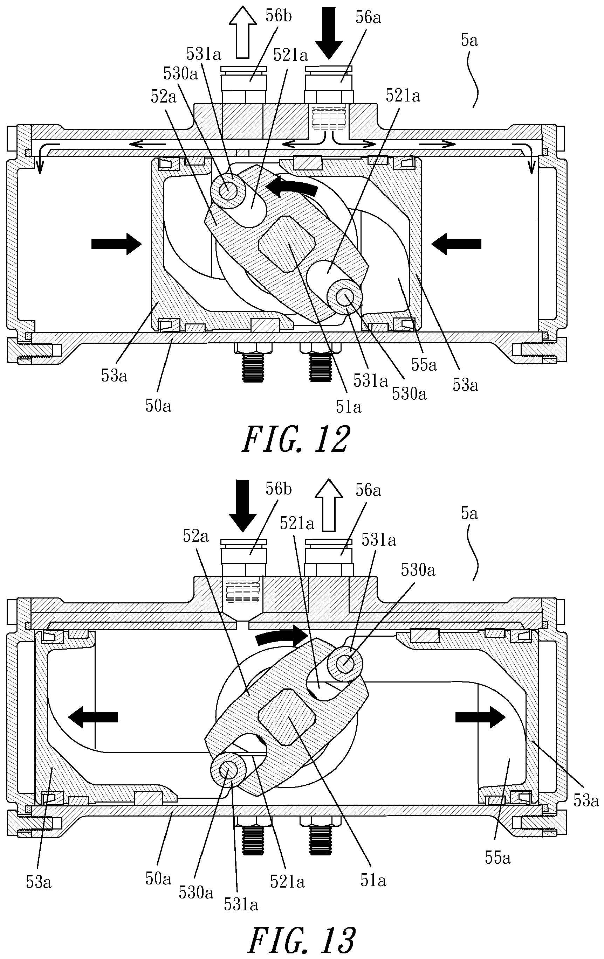

In addition, as shown in Figs. 12 and 13, the pneumatic actuator 5a is a double acting type pneumatic actuator, without the spring set in the single acting type pneumatic actuator. That is to say, during actual application, compressed air can be imported respectively from the normal or inverse pipe joints 56a, 56b of the main body 50a, so that the compressed air can push the two pistons 53a to move linearly. The cam 52a converts the linear pushing force into an axial torque to drive the shaft core 51a to rotate. Its principle of action and the motion flow are similar to the single acting type pneumatic actuator 5. Its linkage with the signal transmitter 6 is also in the same way. The pneumatic actuator 5a is connected with the cam 52a at the middle section of the shaft core 51a inside the main body 50a, so that the cam 52a and the shaft core 51a can move simultaneously. Moreover, the left and right sides of the cam 52a are respectively configured with an embedding slot 521a. The left and right sides of the shaft core 51a are respectively configured with a piston 53a. The ends of the two pistons 53a facing the cam 52a are respectively connected with a contour ring 531a through a connecting rod 530a. The contour ring 531a can be embedded inside the embedding slot 521a and can rotate around the axis. The space between the two pistons 53a inside the main body 50a is an airtight space 55a. The airtight space 55a is communicated with the outside of the main body 50a through a normal pipe joint 56a or an inverse pipe joint 56b, acting as the channel for compressed air to enter the pneumatic actuator 5a. Meanwhile, the normal pipe joint 56a and inverse pipe joint 56b can be respectively imported with compressed air to drive the two pistons 53a to move linearly toward each other or away from each other.

The configuration of an integrally formed assembly slot 57 on the upper part of the main body 50 of the pneumatic actuator 5 and a shaft hole 570 between the main body 50 and the assembly slot 57, the shaft cores of the pneumatic actuator 5 and signal transmitter 6 can be integrated. An extra bearer 3 for connecting the two devices is no longer needed. The signal transmitter 6 and pneumatic actuator 5 are combined into one body. Thus, the pneumatic actuator 5 and signal transmitter 6 can have consistent perpendicularity and concentricity, and will not be affected by the vibration caused by the flow of the fluid inside the pipe 4a. As the components are reduced, the assembly work is less difficult.

Therefore, the present invention has the following advantages and functions in actual applications.
1. The originally independent and separated signal transmitter 6 and pneumatic actuator 5 are integrated to ensure consistent perpendicularity and concentricity of the shaft cores of the pneumatic actuator 5 and the signal transmitter 6, removing the risk of inaccurate concentricity and the perpendicularity. There are no longer potential risks of loosening of the screw, the nut, or the bearer caused by the vibration of the pipe due to the flow of the fluid inside the pipe.
2. The integration of the signal transmitter 6 and pneumatic actuator 5 can reduce components and save labor for assembly, and thus can reduce the burden of the user. Meanwhile, the potential risks resulting from improper assembly are eliminated.
3. The signal transmitter 6 and pneumatic actuator 5 no longer need to be purchased separately. The user only need to place one order from one supplier.

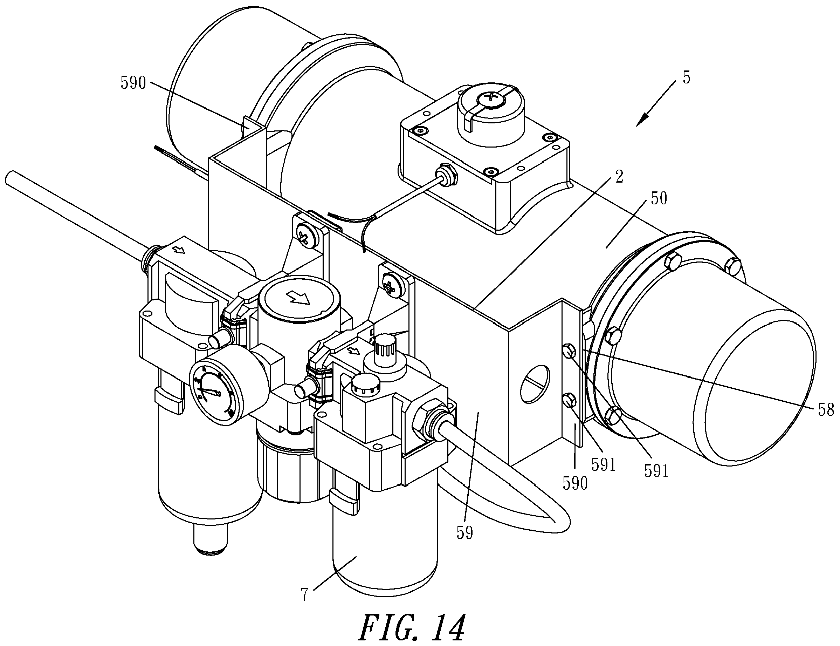

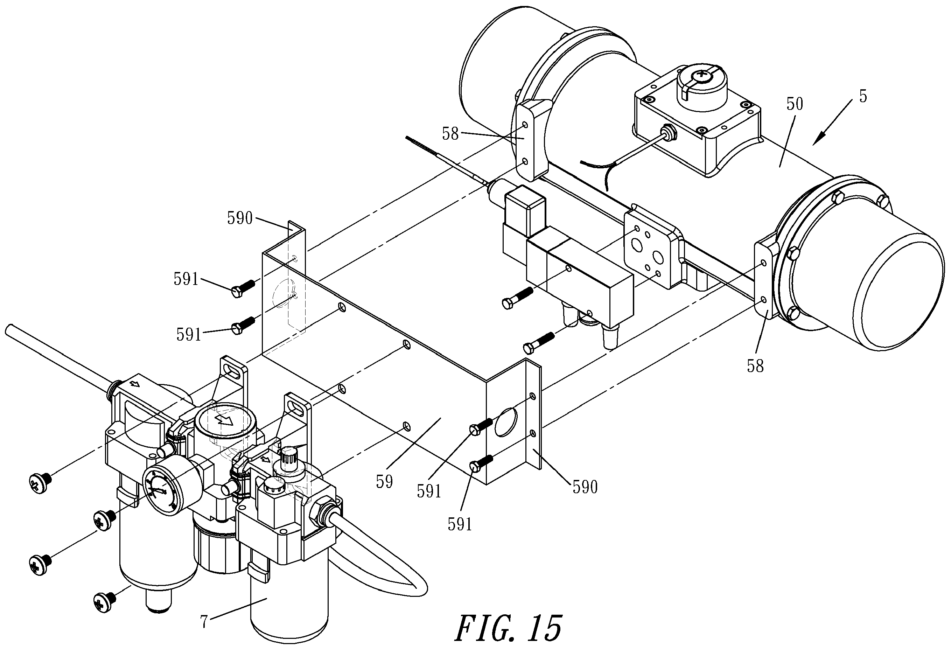

Furthermore, refereeing to Figs. 14 and 15, the pneumatic actuator 5 is usually used with a filter regulator lubricator (FRL) 7, enabling the compressed air to be filtered out moisture via the filter regulator lubricator and adding lubricating oil to the compressed air and further releasing the compressed air to enter into the pneumatic actuator 5 to act, thereby effectively protecting the metal inside the pneumatic actuator 5 to avoid metal corrosion. The structure of the pneumatic actuator 5 fixing the filter regulator lubricator is to install two fixed surfaces 58 separated left and right on an outer wall of one side on the body 50 of the pneumatic actuator 5; a holder 59 is installed on the side of the fixed surfaces 58 of the body 50, the left and right ends of the holder 59 respectively extend toward the body 50, an attaching surface 590 is configured to attach with the fixed surface58 and a screw piece 591 passes through the attaching surface 590 to enable the attaching surface 590 to be fixed with the fixed surface58, thereby fixing the holder 59 with the body 50; and, the end of the holder 59 facing away from the body 50 is fixed with the filter regulator lubricator 7. Therefore, the filter regulator lubricator 7 is capable of being fixedly combined with the pneumatic actuator 5 to be an unity after combination, which improves the drawback of mess resulting from the well-known filter regulator lubricator 7 to be fixed or placed randomly.

To summarize, the present invention not only features novelty, but also has good added value for industrial application. Therefore, an application for patent is proposed. Your inspection and approval will be highly appreciated.

## Claims

1. An improved structure of a pneumatic actuator (5), comprising a shaft core (51) integrally formed between the pneumatic actuator (5) and a connected signal transmitter (6), an assembly slot (57) integrally formed with the body spaced on an upper portion of a body (50) of the pneumatic actuator (5) and the position corresponding to an shaft line of the shaft core (51) to enable the signal transmitter (6) to be fixed inside the assembly slot (57), a shaft hole configured on a bottom of the assembly slot (57) and the position corresponding to the shaft core (51), the shaft core (51) passing through the shaft hole and installed inside the body (50) and the assembly slot (57), the assembly slot (57) covered by a cover plate, and through the configuration, the signal transmitter (6) and the pneumatic actuator (5) integrated to ensure a consistent perpendicularity and concentricity of the shaft core (51).

2. The improved structure of the pneumatic actuator (5) of claim 1, wherein the bottom end of the shaft core (51) is configured with an engaging hole (510) to connect with a valve of a rotating shaft controlling the flow of the fluid.

3. The improved structure of the pneumatic actuator (5) of claim 1, wherein the pneumatic actuator (5) is a single acting type pneumatic actuator and joints and fixes with a cam (52) at a middle section of the shaft core (51) inside the body (50), thereby enabling the cam (52) and the shaft core (51) to be in linking-up movement integrally, and the left and right ends of the cam (52) are respectively provided with an embedding slot (521); the left and right sides of the shaft core (51) are respectively provided with a piston and two spring sets (54) respectively locate on a back side of the two pistons (53); wherein, the ends of the two pistons (53) facing the cam (52) respectively joint with a cam ring (531) through a connecting rod (530) and the cam ring (531) is capable of being embedded into the embedding slot (521) to position and pivot; one end of the spring set accesses to a side cap (501) secured on the outside of the body (50) and another end accesses to the pistons; and an airtight space (55) is defined inside of the body (50) between the two pistons (53), the airtight space (55) is communicated with an outer surface of the body (50) through a pipe joint to be a channel for the compressed air to go into or out of the pneumatic actuator (5).

4. The improved structure of the pneumatic actuator (5) of claim 1, wherein the pneumatic actuator (5) is a double-acting type pneumatic actuator jointing and fixing with a cam (52) at a middle section of the shaft core (51) inside the body (50), thereby enabling the cram and the shaft core (51) to be in a linking-up movement integrally, and an embedding slot (521) is configured respectively on the two left and right ends of the cam (52); a piston is configured respectively on the two left and right sides of the shaft core (51); the ends of the two pistons (53) facing the cam (52) are respectively jointed with a cam ring (531) via a connecting rod (530), wherein the cam ring (531) is allowed to be embedded into the embedding slot (521) to position and pivot; and, an airtight space (55) is defined inside the body (50) between the two pistons (53), wherein the airtight space (55) is communicated with an outer surface of the body (50) via the two pipe joints to be a channel for the compressed air to go into or out of the pneumatic actuator (5), and the two pipe joints are allowed to be respectively inputted with the compressed air to drive the two pistons (53) to in a linear movement of approaching mutually or departing mutually.

5. The improved structure of the pneumatic actuator (5) of claim 1, wherein the signal transmitter (6) is a proximity sensor, having two magnetic sensors (60) located on the left and right sides of the shaft core (51) and a magnet (61) secured with the shaft core (51), and the magnet (61) and the shaft core (51) are configured perpendicularly and crossly and resting on a same level surface with the two magnetic sensors (60), and the magnet (61) is configured between the two magnetic sensors (60).

6. The improved structure of the pneumatic actuator (5) of claim 1, wherein the assembly slot (57) and the body (50) are made of the stainless steel and integrally formed in a manner of casting.

7. The improved structure of the pneumatic actuator (5) of claim 1, wherein one side of the body (50) are provided with the two fixed surfaces (58) separated left and right; a holder (59) is installed on a side of the fixed surface (58) of the body (50), the two left and right ends of the holder (59) respectively extend toward the body (50), and an attaching surface (590) is configured to attach with the fixed surface (58) and fix with the fixed surface (58) via a screw piece (591) passing through the attaching surface (590), thereby fixing the holder (59) with the body (50); and, an end of the holder (59) facing away from the body (50) is fixed with a filter regulator lubricator (7).

8. The improved structure of the pneumatic actuator (5) of claim 7, wherein the filter regulator lubricator (7) enables the compressed air to be filtered out the moisture via the filter regulator lubricator (7) and adds the lubricating oil to the compressed air, and then releases the compressed air to enter into the pneumatic actuator (5).
